# EUROPEAN PATENT SPECIFICATION

(11) **EP 0 772 327 B1**
(45) Date of publication and mention of the grant of the patent: **29.06.2005**
(21) Application number: 96308063.5
(22) Date of filing: 06.11.1996
(51) Int. Cl.: H04L 12/58, H04B 7/26

(54) **Electronic mail forwarding system**
System zum Weiterleiten von elektronischer Post
Système de transport de courrier électronique

(30) Priority: 06.11.1995 JP 28737795
(43) Date of publication of application: 07.05.1997
(73) Proprietor: SHARP KABUSHIKI KAISHA, Osaka 545 (JP)
(72) Inventor: Kuki, Hikaru, Yamatokoriyama-shi, Nara 639-11 (JP)
(74) Representative: Brown, Kenneth Richard

(56) References cited:
- WO-A-90/14726
- WO-A-94/08419

## Description

### 1. Field of the Invention

The present invention relates to an electronic mail forwarding (transferring) system and, more particularly, to an electronic mail forwarding system between a mail communication terminal connected to a data communication network and a portable wireless communication terminal connected to a wireless data communication network.

### 2. Description of the Related Art

Recently, systems for forwarding electronic mails (herein referred to as mails) have been widely used to effect forwarding of messages or informations to individuals between personal computers or personal terminals by utilizing data communication network. There are various kinds of electronic mail forwarding systems.

It is known in the art that, as the most general mail forwarding system, a mail communication terminal A (host computer) is arranged to store an address of a mail of another mail communication terminal B (wireless communication terminal) whereby, when a mail is forwarded to the mail communication terminal A through the data communication network, the mail is automatically forwarded to the mail communication terminal B via the wireless data communication network. This system will be referred to as prior art 1.

It is also known that a mail host (host computer) is prepared independently of the mail communication terminals A and B to store a received mail, whereby the received mail can be read out from either of the mail communication terminals A and B. This system will be referred to as prior art 2.

In addition, an electronic mail system has been proposed in Japanese Laid Open Patent Application No. HEI 3(1991)-274,942 in which the electronic mail system comprises a plurality of mail communication terminals and a center device (mail server) having a mail storage exchange function in which individual mail boxes are prepared to perform a forwarding function between the individual mail boxes. Each of the mail communication terminals is arranged to enable polling (viz., a function to read out the mail box) for drawing the mail out therefrom. This system will be referred to as prior art 3.

In the prior art 1, however, each user is required to operate such as setting of the address for forwarding on the host computer (herein referred to as the mail communication terminal A) before his going out in order to have the mail forwarded. With this prior art system, the mail is forwarded to the wireless communication terminal (herein referred to as the mail communication terminal B) at the time of receipt of the mail in the host computer and the mail forwarding system is not provided with a function to set a mail forwarding time. This is reflected by a drawback in that it is difficult to effect settings to stop forwarding of the mail by the host computer A during the user's going out time and to restart forwarding the mail again at a later time, whereby the wireless communication terminal B is required to continue its communication function at all times for receiving the mail, thereby increasing a power consumption.

In the prior art 2, further, although it is not required to effect setting of the mail addressee on the host computer, it is necessary to confirm the inquiry of the presence or absence of the received mail even when there exists no unread mail addressed for the user since the received mail is stored in the host computer to enable reading out of the mail from the plurality of wireless communication terminals (which indicates the mail communication terminals A and B). In each inquiry, power consumption is increased by the wireless communication terminals A and B and, further, the communication cost is consequently increased.

In the prior art 3 of Japanese Laid Open Patent Application No. HEI 3(1991)-274,942, further, a center device (a mail server) having a mail storage exchange function is provided with a mail box corresponding to each mail communication terminal (a network terminal) and, hence, it is possible to read out the mail from the mail box to effect forwarding of the mail, whereby mail forwarding efficiency is improved between individual communication terminals.

However, although the aforementioned center device is arranged to realize the forwarding function between the mail box and each of the mail communication terminals, the mail drawn from the mail box to the mail communication terminal is not arranged to be forwarded to a wireless communication terminal of the portable type via a wireless data communication network.

For this reason, the mail received at the mail communication terminal can not be read out by the wireless communication terminal of the portable type through the use of wireless data communication network when the user is going out.

In order to realize a mail forwarding system of this type, a remarkable change or modification should be widely made not only in softwares in the host computers and the wireless communication terminals but also in softwares in the center device.

WO 97/08906, which forms part of the state of the art by virtue of Articles 54(3) and 158 EPC, discloses a system for transmitting e-mail over a mobile telephone network with the aid of short text message routing means existing in the network. Software in a computer decodes an agent in a modified short text message received by a mobile station and initiates the transmission of e-mail from a host arrangement

### SUMMARY OF THE INVENTION

The present invention has been made with a view to overcoming the above circumstances. It is therefore an object of the present invention to provide an electronic mail forwarding system which is arranged to enable reading out a mail received at a mail communication terminal connected to a data communication network with the use of a portable wireless communication terminal located at outside via a wireless data communication network at any convenient time by transmitting a forwarding-request signal thereto.

The present invention provides an electric mail forwarding system comprising portable-type wireless communication terminal for a user and a mail communication terminal for the same user, the mail communication terminal capable of forwarding an electric mail via a wireless data communication network in response to a forwarding request signal for the electric mail, in which the wireless communication terminal comprises: a forwarding-request signal generating section for generating the forwarding-request signal which includes additional information designating a forwarding time and a forwarding time interval of a given electric mail; an electric mail processing section for transmitting the generated forwarding-request signal to the mail communication terminal via the wireless data communication network; an electric mail receiving section for receiving the electric mail from the mail communication terminal; and an electric mail storage section for storing the received electric mail, in which the mail communication terminal comprises: a mail box for storing the electric mail received from a mail communication terminal for another user via a data communication network; a forwarding-request signal recognizing section for recognizing the additional information contained in the forward-request signal received from the wireless communication terminal via the wireless data communication network; and a communication processing section for sequentially forwarding the electric mail stored in the mail box to the wireless communication terminal in accordance with the recognized forwarding time and forwarding time interval.

### BRIEF DESCRIPTION OF THE DRAWINGS

Fig. 1 is a block diagram showing a basic arrangement of an electronic mail forwarding system according to the present invention;
Fig. 2 is a block diagram showing a preferred embodiment of a mail forwarding system provided at a wireless communication terminal;
Fig. 3 is a block diagram showing a preferred embodiment of a mail forwarding system 1 provided at a host computer;
Fig. 4 is a block diagram showing a preferred embodiment of a mail forwarding system 2 provided at the host computer;
Fig. 5 is a schematic view showing a communication processing between the wireless communication terminal and the host computer;
Fig. 6 is a view showing a signal format;
Fig. 7 is a view showing an example of relationship between a kind of signals and an example of various values appointed therefor;
Fig. 8 is a view showing an example of a forwarding-request signal;
Fig. 9 is a flow-chart showing start processing steps for mail forwarding at the wireless communication terminal;
Fig. 10 is a flow-chart showing end processing steps for mail forwarding at the wireless communication terminal; and
Fig. 11 is a flow-chart showing processing steps for mail forwarding at the host computer.

### DESCRIPTION OF PREFERRED EMBODIMENTS

The present invention provides an electric mail forwarding system between a mail communication terminal and a portable-type wireless communication terminal, the mail communication terminal serving to receive an electric mail via a data communication network, and the wireless communication terminal serving to transmit a forwarding-request signal for the electric mail to the mail communication terminal via a wireless data communication network, in which the mail communication terminal comprises:
a mail box for storing the received electric mail;
a forwarding-request signal recognizing section for receiving the forwarding-request signal transmitted from the wireless communication terminal and for recognizing additional information contained in the forwarding-request signal; and
a wireless data communication processing section for sequentially forwarding the electric mail to the wireless communication terminal based on the recognized forwarding-request signal.

Also, the present invention provides an electric mail forwarding system in which the wireless communication terminal comprises: a forwarding-request signal generating section for generating the forwarding-request signal for the electric mail received in the mail communication terminal; an electric mail processing section for transmitting the generated forwarding-request signal to the mail communication terminal and for receiving the electric mail from the mail communication terminal; and an electric mail storage section for storing the received electric mail.

In the present invention, the wireless communication terminal is composed of a portable information unit having a wireless communication function. The mail communication terminal is composed of a personal computer having a communication function. Also, the wireless data communication network may, for example, comprise a wireless telephone circuit. Further, the data communication network may, for example, comprise internal network, LAN (a Local Area Network) and WAN (a Wide Area Network).

According to the present invention, it is possible to read out the electronic mail received in the mail communication terminal connected to the data communication network by transmitting the forwarding-request signal from the portable wireless communication terminal at any place in the network at a convenient time via the wireless data communication network.

The forwarding-request signal generating section preferably generates the forwarding-request signal including additional information on designation of a forwarding time and a forwarding time interval of a given electric mail.

If the forwarding-request signal recognizing section recognizes the forwarding-request signal including the additional information on designation of a forwarding time and a forwarding time interval of a given electric mail, the wireless data communication processing section preferably forwards the electric mail to the wireless communication terminal at the designated forwarding time and for the designated forwarding time interval.

With the electronic mail forwarding system stated above, it is possible to transmit a signal to the mail communication terminal at the time and for time interval designated for a desired electronic mail to be forwarded to the wireless communication terminal and, thus, the user does not need to access the mail communication terminal with a single purpose of inquiring the presence of the received mail. Also, since the wireless communication terminal is not operated except during the designated time interval, it is possible to reduce power consumption of the wireless communication terminal and, at the same time, to minimize the communication cost.

The forwarding-request signal generating section preferably generates the forwarding-request signal including additional information on designation of a name of an electric mail sender, a title and an urgency level.

If the forwarding-request signal recognizing section recognizes the forwarding-request signal including the additional information on designation of a name of an electric mail sender, a title and an urgency level, the wireless data communication processing section preferably forwards the electric mail to the wireless communication terminal upon selection of the electronic mail sender, the title and the urgency level.

With the arrangement mentioned above, since it is possible to add the name of the sender of the electronic mail, the title and the urgency level for designation in the forwarding-request signal to be forwarded, it is possible to select and forward the desired mail from the mails received in the mail communication terminal to the wireless communication terminal at user's hand for reading-out.

Further, the wireless communication terminal is preferably arranged to transmit the forwarding-request signal to the mail communication terminal at the start of the mail receiving function and to transmit the forwarding-end signal at the end of the mail receiving function whereby the mail communication terminal completes its forwarding of the electronic mail.

In addition, in the electronic mail forwarding system which is not provided with the electronic mail forwarding function between the mail communication terminal and the wireless communication terminal, it is possible to realize the electronic mail forwarding function between the mail communication terminal and the wireless communication terminal by mere change in software of the mail communication terminal (host computer) of the user and the wireless communication terminal.

A preferred embodiment of the present invention will now be described in detail with reference to the drawings. It is to be noted that the present invention is not limited by the detailed description which will be made hereinafter.

Also, it is to be noted that, according to the present invention, a portable wireless communication terminal to be used by a user who is going out or moving will be hereinafter referred to as a wireless communication terminal and, in addition, a mail communication terminal (a network terminal) connected to a wireless data communication network to be used for the user's normal business for transmitting and receiving an electronic mail will be hereinafter referred to as a host computer.

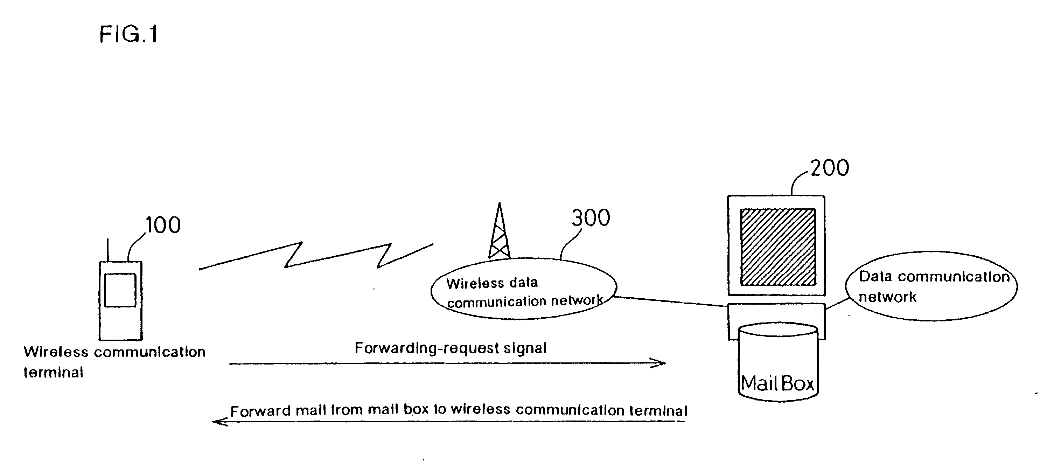

Fig. 1 is a block diagram showing a basic arrangement of an electronic mail forwarding system according to the present invention. In Fig. 1, the reference numeral 100 indicates a wireless communication terminal, the reference numeral 200 indicates a mail communication terminal (a host computer) having a mail box, the reference numeral 300 indicates a wireless data communication network for enabling data communication between the wireless communication terminal 100 and the mail communication terminal 200, and the reference numeral 400 indicates a data communication network for enabling data communication between the host computers 200.

The wireless communication terminal 100 has a mail receiver application programme which, when it is turned on, transmits the forwarding-request signal to the host computer 200. The host computer 200 judges the forwarding-request signal and sequentially forwards to the wireless communication terminal 100 unread mails stored in the mail box (the storage device) and subsequent mails delivered to the mail box of the host computer 200.

The forwarding-request signal is additionally provided with the designation of the forwarding time interval (e.g., five minutes or ten minutes) and, therefore, it becomes unnecessary to operate the communication function at all times so that energy saving of the wireless communication terminal 100 becomes possible. Further, an arrangement may be made to forward the mail from the host computer 200 after the forwarding-request signal has been once transmitted to the host computer 200. This arrangement makes it unnecessary to make inquiry about the presence or absence of the received mail in the mail box, thereby enabling reduction of data communication cost due to the inquiry. In addition, the forwarding-request signal may be modified such that another wireless communication terminal is designated by completing the data forwarding and changing the addressee.

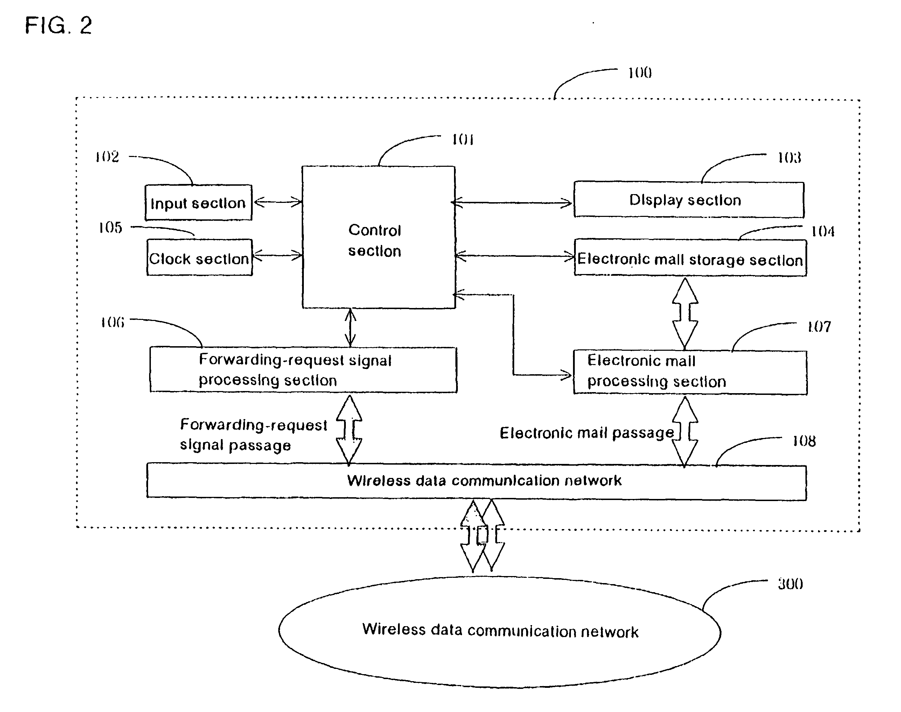

Fig. 2 is a block diagram showing one example of a mail forwarding system of the wireless communication terminal according to the present invention. In Fig. 2, the wireless communication terminal 100 comprises a control section 101, an input section 102, a display section 103, an electronic mail storage section 104, a clock section 105, a forwarding-request signal processing section (forwarding-request signal generating section) 106, an electronic mail processing section 107 and a wireless data communication processing section 108.

The control section 101, the electronic mail storage section 104, the clock section 105, the forwarding-request signal processing section 106, the electronic mail processing section 107 and the wireless data communication processing section 108 are usually composed of a micro-computer including CPU, ROM, RAM, timer and I/O port.

The input section 102 is composed of smaller panel switch or keyboard. The display section 103 is composed of a liquid crystal display (LCD) or EL display.

The input section 102 functions to start a mail receiving application programme to input a mail forwarding-request signal, and control information on mails to be forwarded. Further, the input section 102 serves as a timing information designation means for designating timing information such as forwarding time and forwarding time interval of a desired mail in the forwarding-request signal or an additional information designation means for designating an additional information such as address of the electronic mail sender, title and the degree of urgency in the forwarding-request signal.

The display section 103 functions to display the input mail or the received mail in the picture. The electronic mail storage section 104 stores the mails which are received. The clock section 105 functions to effect clocking of time for receiving the received mail for a certain time interval or at a certain time.

The wireless data communication processing section 108 is connected to a wireless data communication network 300 and functions to control communication protocol for wireless data communication such as modification of the wireless data and data communication control.

The wireless data communication processing section 108 makes it possible to select and use a suitable one of a plurality of communication protocols which are currently used as a standard.

Also, the wireless communication processing section 108 functions to effect judgement related to changeover of the mail forwarding and receiver processing and communication means in response to the input signal.

The wireless data communication network 300 may, for example, be performed by utilizing a wireless packet communication and wireless telephone or by the method of transmitting data instead of voice or by the utilization of infrared rays.

The forwarding-request signal processing section 106 serves to transmit a mail forwarding-request signal and a mail forwarding-end signal to the host computer 200, or to receive an acknowledgement (response) signal from the host computer 200 for judgement of the content thereof.

Also, the adjusting method in the forwarding-request signal processing section 106 is achieved by an optional method which is mostly suited at the time of adjusting. For example, it may be possible to employ the same method as the electronic mail processing section 107 in respect of signal transmitting or receiving method, or to utilize "a short message communication function" which is a subsidiary function of the digital portable telephone system.

Further, the mail forwarding-request signal may be provided with an appointment designation such as the time interval of the mail forwarding and the requested time for next mail forwarding, and a designation of the sender who intends to effect the mail forwarding, the title and the degree of urgency, etc.

The electronic mail processing section 107 serves to transmit or receive the normal electronic mail.

The electronic mail processing section 107 is selected arbitrarily depending on the electronic mail system employed by the user. However, the electronic mail processing section 107 should be able to receive the forwarded mail from the host computer 200.

The mail forwarding system of the host computer 200 will now be described in detail hereinafter. The mail forwarding system of the host computer 200 may be arranged in one of the two systems according to the connection method relative to the wireless data communication network 300 and the host computer 200 of the data communication network 400.

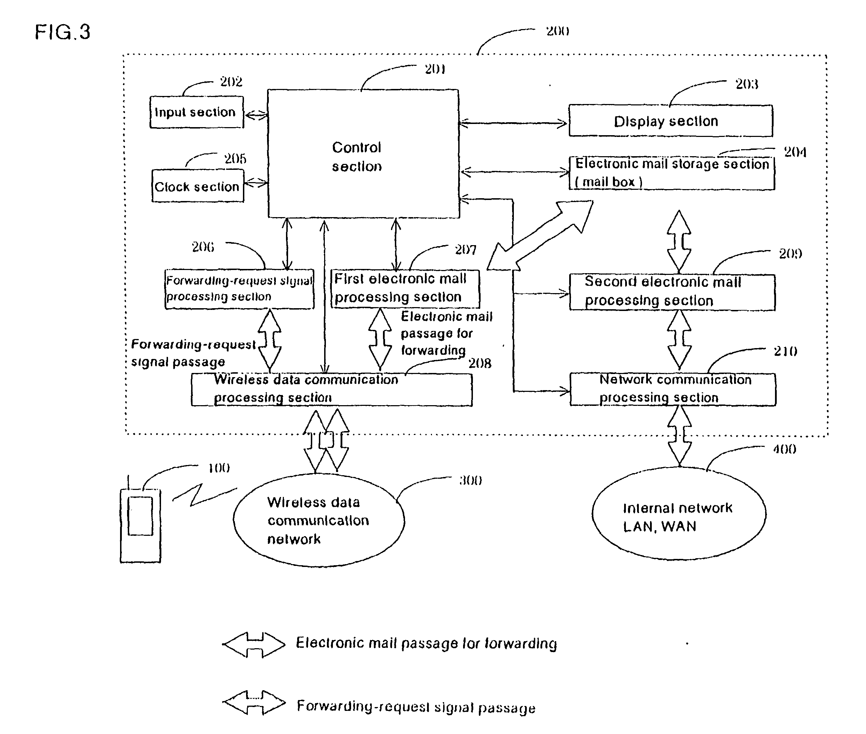

In one system, the host computer 200 is directly connected to the wireless data communication network 300 and data communication network 400, respectively. In this instance, the host computer 200 is arranged in a manner as shown in the block diagram of Fig. 3.

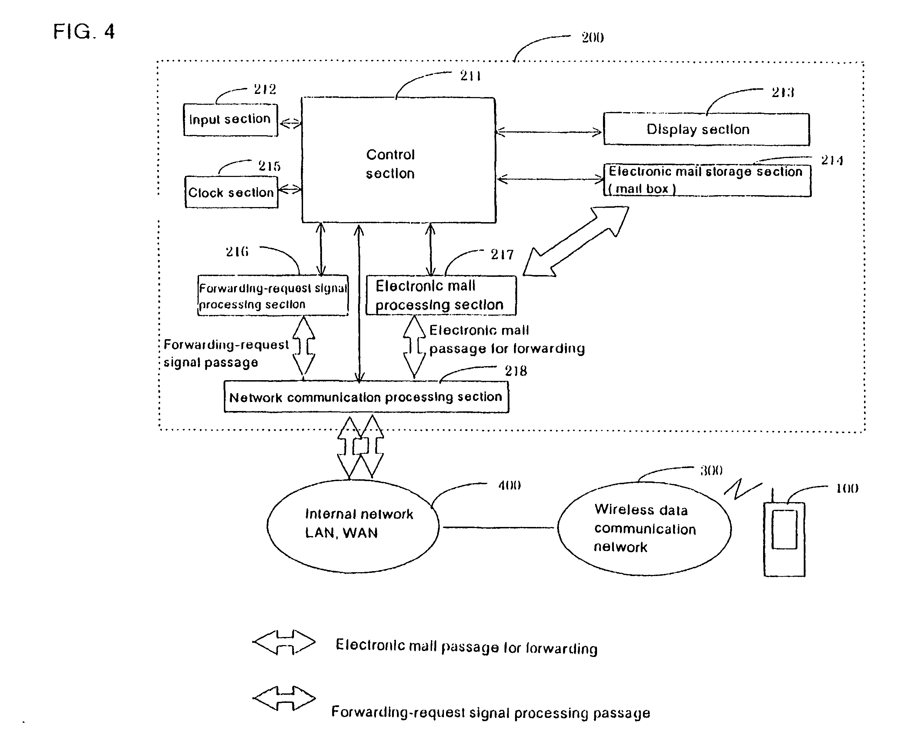

In the other system, the wireless data communication network 300 is connected to the data communication network 400 as shown in a manner of block diagram of Fig. 4.

Fig. 3 is the block diagram showing a preferred embodiment of the mail forwarding system 1 of the host computer. In Fig. 3, the host computer 200 comprises a control section 201, an input section 202, a display section 203, an electronic mail storage section 204, a clock section 205, a forwarding-request signal processing section (forwarding-request signal recognizing section) 206, a first electronic mail processing section 207, a wireless mail communication processing section (wireless data communication processing section) 208, a second electronic mail processing section 209 and a network communication processing section 210.

The control section 201, the input section 202, the display section 203, the electronic mail storage section 204, the clock section 205, the forwarding-request signal processing section 206, the first electronic mail processing section 207, the wireless mail communication processing section (wireless data communication processing section) 208, the second electronic mail processing section 209 and the network communication processing section 210 are composed of a micro-computer including CPU, ROM, RAM and I/O part. The electronic mail storage section 204 comprises RAM, a hard disk drive, a floppy disk drive or an optical-magnetic disk drive etc.

The input section 202 comprises a keyboard or a mouse etc. The display section 203 comprises a CRT display or a liquid crystal display (LCD) etc. The control section 201 is connected to the display section 203 serving as the mail display means, the input section 202 serving as the information input means and the clock section 205 which provides time.

The first electronic mail processing section 207 should be designed to enable forwarding of the mail to the electronic mail processing section 107 of the wireless communication terminal 100.

The host computer 200 is provided with the wireless data communication processing section 208 which serves to process data communication relative to the wireless data communication network 300 which forwards the mail to the wireless communication terminal 100, and the network communication processing section 210 which serves to process data communication relative to the data communication network 400 which transmits or receives the mail to or from outside

In addition, the data communication network 400 is composed of an interval network, LAN (a Local Area Network) and WAN (a Wide Area Network) etc.

The mail is received via the network communication processing section 210 and the second electronic mail processing section 209 and, thereafter, stored in the electronic mail storage section 204. At this instant, if the host computer 200 is in use by the user, the mail can be read out on the host computer 200.

When the forwarding-request signal is transmitted from the wireless communication terminal 100, the forwarding-request signal is delivered to the forwarding-request signal processing section 206 via the wireless data communication processing section 208. When the forwarding-request signal is confirmed by the forwarding-request signal processing section 206, the unread mail stored in the electronic mail storage section 204 is transmitted to the first electronic mail processing section 207 in accordance with conditions of the forwarding-request signal and forwarded to the wireless communication terminal 100 through the use of the same system as the normal electronic mail transmitting system.

If there exists no unread mail in the mail storage section 204 when the forwarding-request signal is received, the acknowledgement signal is transmitted by the wireless data communication processing section 208.

Thereafter, unread mails received in the electronic mail storage section 204 are kept being watched in accordance with the conditions of the forwarding-request signal until the forwarding-request signal is received, and are transmitted to the wireless communication terminal 100 via the first electronic mail processing section 207.

When the forwarding-end request of the electronic mail is transmitted from the wireless communication terminal 100, this signal is transmitted to the forwarding-request signal processing section 206 via the wireless data communication processing section 208. When the forwarding-end signal is confirmed by the forwarding-request signal processing section 206, the transmitting operation of the unread mails stored in the electronic mail storage section 202 relative to the wireless communication terminal 100 is completed, and the forwarding-request signal processing section 206 transmits the acknowledgement signal to the wireless communication terminal 100 via the wireless data communication network 300.

Fig. 4 is a block diagram showing a preferred embodiment of the mail forwarding system 2 of the host computer. In Fig. 4, the wireless data communication network 300 is connected to the data communication network 400. In this embodiment, the mail received from the external data communication terminal is forwarded to the wireless communication terminal 100 via the wireless data communication network 300 so that the electronic mail processing section 217 and the network communication processing section 218 can be provided in common. The other constituents of the mail forwarding system are similar to those of the other embodiments.

The electronic mail transmitted from outside via the network communication processing section 218 and the electronic mail processing section 217 is stored in the electronic mail storage section 214. When the forwarding-request of the electronic mail is received, the unread mail is read out from the electronic mail storage section 214 and forwarded to the wireless communication terminal 100 via the electronic mail processing section 217, the network communication processing section 218, the data communication network 400 and the wireless data network 300.

At present, the data communication network 400 may comprise either one of various networks such as the internal network, LAN (Local Area Network) and WAN (Wide Area Network) etc., which have different address system (viz., an address for electronic mail or an address for network), or different data forwarding system.

The terminal which performs the data communication with the use of the data communication network is arranged to employ the communication protocol depending on the kind of the terminal. Each of the communication processing sections described in this patent specification enables to use a plurality of communication protocols which are currently used as standard depending on the network to be connected. Describing the protocol in accordance with OSI (Open Systems Interconnection: International Standard Network Architecture) models defined by ITU-TS (Electric Communication Standardization Sector which is originated from CCITT (International telephone and Telegram Consultative Committee) and ISO (International Standardization Organization), each communication processing section comprises a first layer (a physical layer) to a fourth layer (a transport layer), and the electronic mail processing section and the forwarding-request processing section belong to fifth to seventh layers (application layers).

Each terminal and the host computer have a network address for its identification when the communication is performed on the data communication network and, normally, the address is principally defined by the third layer.

The electronic mail processing sections 207 and 217 may vary depending on the electronic mail forwarding system utilized by the operator, but may be any device as long as the device has a function to transmit or receive the mail to the terminal or the host computer.

In the present embodiment, a mail address is employed in order to designate a specific individual, with the mail address being different from the network address to designate the terminal on the network.

In a case where the forwarding function of the present invention is added to the existing electronic mail systems, the mail systems are further provided with the forwarding-request signal processing section, the electronic mail storage section serving to store the unread mails received therein, and the electronic mail processing section which serves to confirm the presence or the absence of the mail in the electronic mail storage section for forwarding the received mail to the communication processing section.

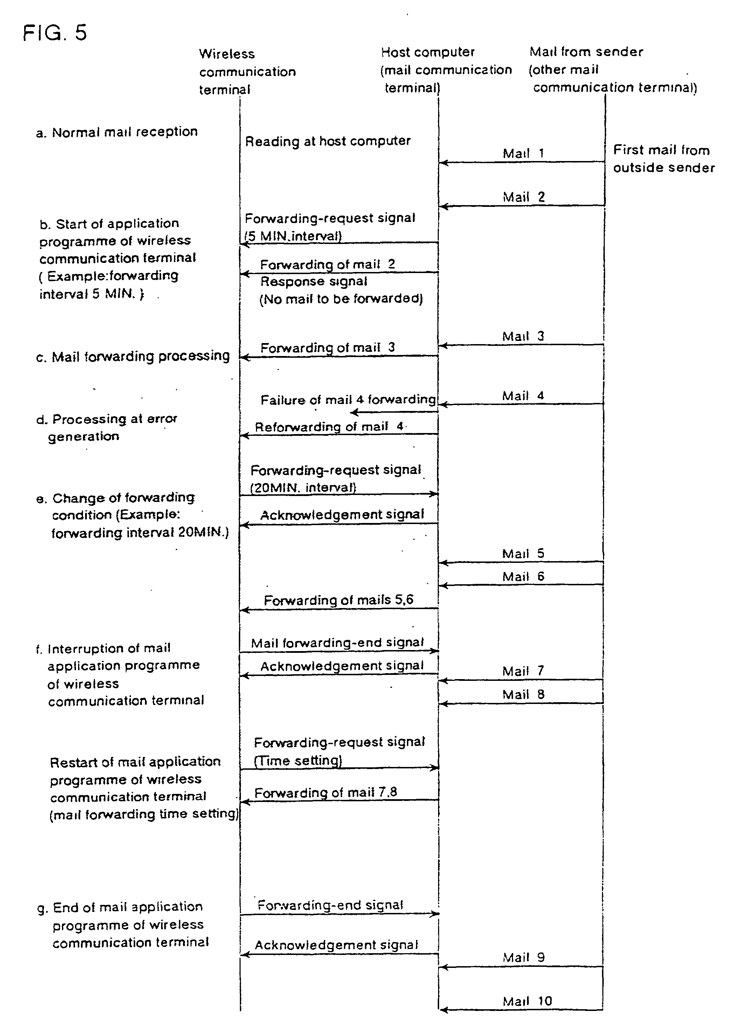

Fig. 5 is a diagram showing the communication processing steps to be carried out between the wireless communication terminal and the host computer.

In Fig. 5, a plurality of processing steps are indicated as follows,

### Step a: normal mail transmitting and receiving, reading out and storing step.

The operator is able to read out the mail on the mail display application programme of the host computer 200 when the host computer 200 receives the mail during operation of the host computer 200 normally located in his office etc. The received mail is stored in the electronic mail storage section (the mail box) and the operator is able to draw the mail at any time to read the same on the mail display application programme.

### Step b: a step in which the wireless communication terminal starts its application programme.

When the operator goes out from his office, he is able to forward the unread mail to the wireless communication terminal 100 from the host computer 200 at any time and to read out the mail on the wireless communication terminal 100.

When the electronic mail receiving application programme of the wireless communication terminal is started, the forwarding-request signal is transmitted to the host computer 200 from the wireless communication terminal 100 via the wireless data communication network 300. When the host computer 200 receives that signal, the host computer 200 forwards the mail stored therein to the wireless communication terminal 100.

At this time, even if there exists no stored mail, the host computer 200 sends the acknowledgement signal to indicate a situation of absence of the mail for informing the operator that the host computer 200 has received the signal from the wireless communication terminal.

### Step c: mail forwarding step.

Forwarding of the mail is always performed by the host computer. The host computer employs the mail forwarding protocol specifically suited for the network as the mail transmitting protocol.

In a case where the forwarding-request signal is generated from the wireless communication terminal 100, the mail stored in the electronic mail storage section is forwarded to the wireless communication terminal 100 depending on the conditions (viz., time setting, time interval setting, operator designation, urgency level and title designation) until the host computer receives the forwarding-end signal.

### Step d: a step in which the forwarding is impossible or in which an error has occurred.

In a case where no acknowledgement of data transmitted from the host computer 200 or from the wireless communication terminal 100 is found, or in which an error has occurred, the forwarding of data is repeatedly tried at certain time intervals and the forwarding of data is repeated for certain times until it succeeds. If the forwarding of data does not succeed, the forwarding of data is stopped and, in a case in which there is the time designation or the time interval designation, the forwarding of data is tried again at the next designated time.

### Step e: a step for changing the forwarding condition.

The wireless communication terminal 100 enables the designation of the condition for forwarding the mail to the host computer 200. The condition to be designated includes a mail forwarding time interval designation, a forwarding time setting, a desired transmitter, title and urgency level, etc.

In order to change the forwarding condition, a new forwarding-request signal including condition to be changed is transmitted and the same steps as those performed at the start of forwarding are repeated.

### Step f: a step in which the forwarding of data is interrupted and a resuming step is performed.

When it is required to temporarily interrupt the forwarding of data from the wireless communication terminal 100, the user is required to operate the same step as that of the forwarding-end. In order to resume the temporary interruption of forwarding the data, the forwarding-request signal is transmitted and the user operates the same steps as those performed at the start of forwarding.

### Step g: a step for ending the application programme.

The wireless communication terminal 100 enables to transmit the forwarding-end signal to the host computer 200 for ending the forwarding of the mail. In this instance, the host computer 200 sends the acknowledgement signal to the wireless communication terminal 100.

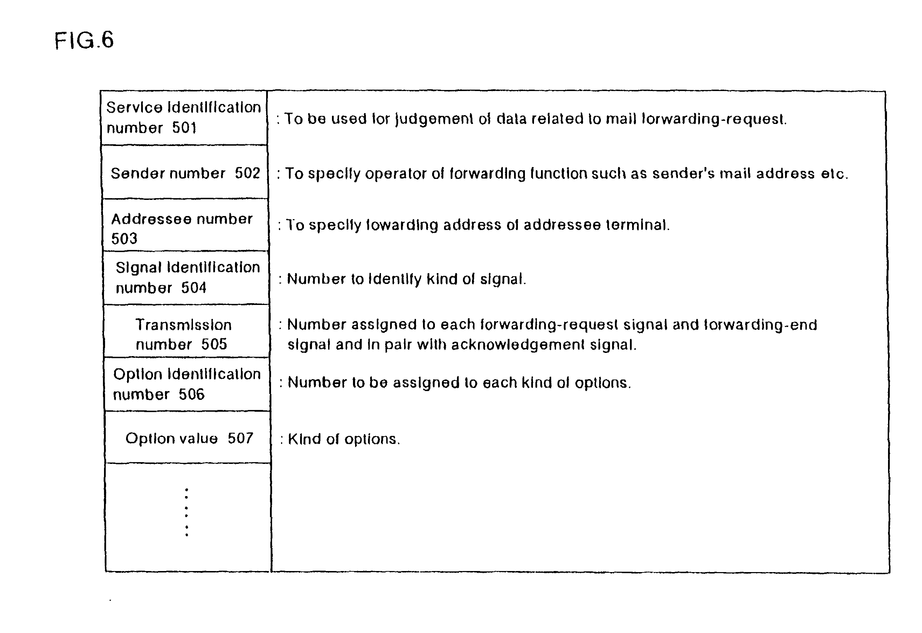

Fig. 6 is a diagram which shows a signal format. The signal format shown in Fig. 6 is for the application layers in OSI model described above, and, in the actual forwarding of data, the data is forwarded to the addressee after the modification process or the adding process of the data format is performed by the lower layer.

The signal format is composed of a service identification number 501, a transmitter number 502, a forwarding address number 503, a signal identification number 504, a forwarding number 505, an option number 506 and an option value 507.

The signals 501 to 507 are previously decided with respect to an appropriate data size. However, the signals related to the option have no constant data size to provide an end signal.

The service identification number 501 is intended to indicate a signal related to the forwarding-request for the wireless communication terminal 100 and the communication processing section of the host computer 200. The data communication processing section delivers the data to the forwarding-request signal processing section when the signal has a certain value.

The sender number 502 is used for specifying the sender who uses the host computer 200. For example, when the host computer 200 has received mails from a plurality of senders, the sender number 502 is needed for forwarding only the mail requested by the user.

The addressee number 503 is used for specifying the user who uses the wireless communication terminal 100. For example, when one company employs a plurarity of wireless communciation terminals 100, the addressee number 503 is needed for forwarding the mail to the wireless communication terminal 100 which is requesting for forwarding of the data.

The signal identification number 504 is used for identifying a kind (viz., the forwarding-request signal, the forwarding-end signal and the acknowledgement signals etc.) of the forwarding-request signal. This identification is performed in the forwarding-request signal processing section.

The forwarding number 505 is a serial number for numbering the forwarding-request signals and the forwarding-end signals and the same forwarding number is used for the acknowledgement signal corresponding to the request signal.

The option identification number 506 indicates that the data following subsequently is an option and also indicates a kind of option.

The option value 507 is described by formats suited for respective options to be set.

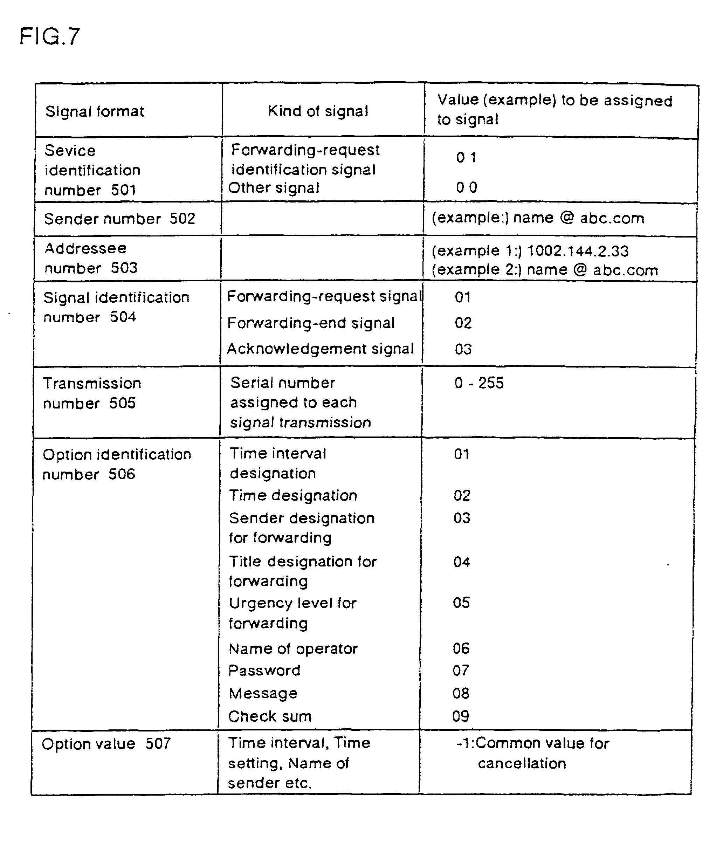

Fig. 7 is a diagram showing one example of a kind of the signals and their respective values. In Fig. 7, an actual assignment of the number is performed at the most effective method at the time of setting data.

The signal identification number 504 is composed of the forwarding-request signal 504a, the forwarding-end signal 504b and the acknowledgement signal 504c, with each of the signals having a value assigned for identification.

The forwarding-request signal 504a is used for starting the forwarding of the mail from the wireless communication terminal 100 to the host computer 200 and, also, to set the forwarding condition in the host computer 200.

The forwarding-end signal 504b is used to complete forwarding of the mail from the wireless communication terminal 100 to the host computer 200.

The acknowledgement signal 504c is used to enable the host computer 200 to inform the wireless communication terminal 100 that the host computer 200 has received the forwarding-request signal 504a or the forwarding-end signal 504b.

The option identification number 506 has a plurality of kinds of items to be set, such as a time interval designation 506a, a time designation 506b, a transmitter designation 506c, a title designation 506d, an urgency level 506e, the operator's name 506f who receives the mail at the wireless communication terminal 100, a password 506g, a message 506h and a check sum 506i etc., with the respective signals having their respective values assigned for identification. Among these signals, only the desired signal is selected and forwarded.

The option identification number 506 has specifically appointed values for canceling the previously input setting, with the appointed values being commonly used in each of the option signals.

The time interval designation 506a enables to set the time interval during which the host computer 200 forwards the mail to the wireless communication terminal 100. The reference time is set to be equal to the time at which the signal is forwarded in a case in which there is no special time designation.

The time designation 506b enables the designation of time for forwarding the mail to the wireless communication terminal 100 from the host computer 200 for the next time. If it is necessary, a plurality of times can be set.

The transmitter designation 506c is used to forward only one of the unread mails received from the certain transmitters to the host computer.

The title designation 506d is used for designating so as to forward only the mail having a certain title.

The urgency level 506e is used for forwarding only the mail having a designation of urgency in a header of the mail. In a case where the mail system has grades in the information of the urgency on the header, the designation is made to the mails of which urgency level is above certain grade.

The user address 506f is used for specifying the user at the wireless communication terminal 100. This address is, for example, used for specifying one of a plurality of users who are assigned to single wireless communication terminal 100.

The password 506g is used for maintaining a security in the forwarding-request signal. This password is checked for verification at the forwarding-request signal processing section and the forwarding process is performed only when the password is correct.

The message 506h is mainly used as an acknowledgement signal which enables the host computer 200 to send information of absence of forwarded mails or information of impossible forwarding of the data to the wireless communication terminal 100 with respect to the forwarding-request signal.

The check sum 506i indicates a value equal to the count of the check sum of whole the transmitted data and the use of this signal enables the confirmation of validity of the data.

Also, when all of the conditions with respect to the operator designation 506c, the title designation 506c, the urgency level 506e are simultaneously designated, the mail satisfying all of the conditions is forwarded from the host computer 200.

Further, it is possible to set a plurality of conditions with the same items with respect to the time designation 506b, the operator designation 506c, the title designation 506d and the urgency level 506e for thereby enabling the forwarding of the mail which satisfies either one of the conditions.

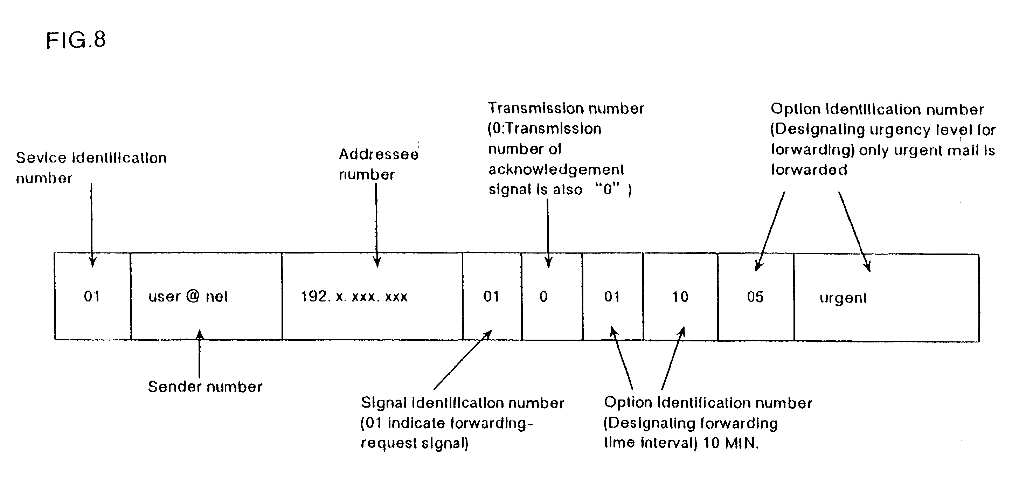

Fig. 8 is a view showing one example of the forwarding-request signal. In Fig. 8, the forwarding-request signal has an option such as designation of forwarding time interval setting and urgency level.

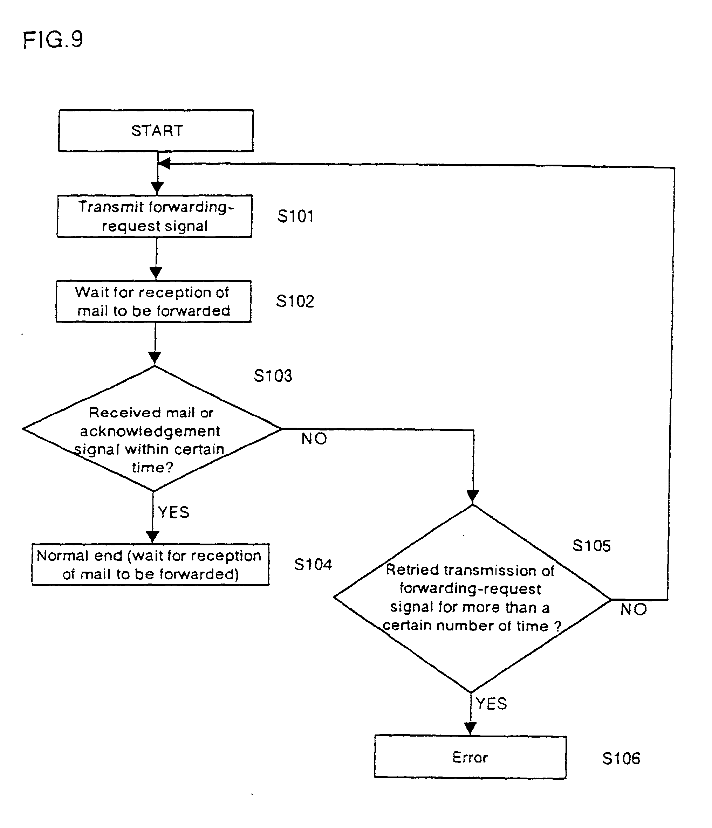

Fig. 9 is a flow chart showing a starting process steps of the mail forwarding of the wireless communication terminal. In Fig. 9, when the communication application programme is turned on, the forwarding-request signal is transmitted (see step S101) and the reception of the forwarded mail is waited for certain interval (see step S102). In a case where the mail is not received for the certain time interval (see step S103), the second forwarding is tried and, if there is no acknowledgement even when repeated forwarding is made more than certain times (see step S104), an error message is returned to indicate the state of no connection with the host computer (see step S106). When the mail is received within the certain time interval (see step S103), the wireless communication terminal is kept under the state of waiting for reception of mails (see step S104).

Under the state of waiting for reception of mails, the terminal remains in its normal mail reception waiting condition. If the forwarding time interval and the forwarding time are designated, the mail reception is waited only for time interval during the data forwarding.

When the mail is not received at the forwarding time, it may be arranged so as to start a special process or to display non-arrival of the message.

When it is required to change the message forwarding condition, the contents to be changed are designated in the forwarding-request signal and the same steps are taken as in the starting step.

Further, when it is required to urgently receive the message, the same process is performed as in the starting step.

Also, the message forwarding step may be made at any time irrespective of waiting operation for the data forwarding.

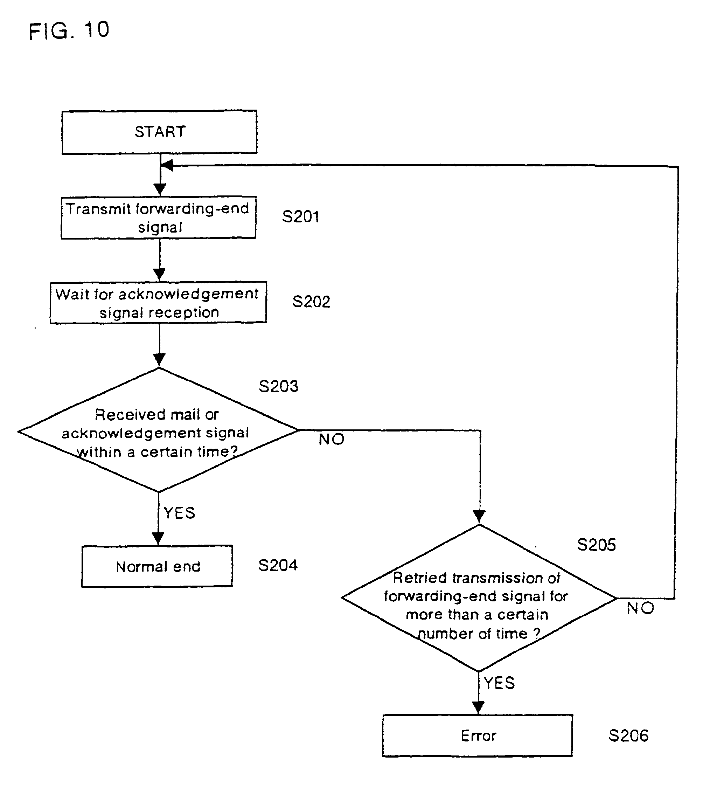

Fig. 10 is a flow chart showing a mail forwarding-end processing step of the wireless communication terminal. In Fig. 10, when the communication application programme is turned off, the forwarding-end signal is transmitted (see step S201), and the acknowledgement signal reception is awaited for a certain interval (see step S202). when the acknowledgement signal is not received within the certain time interval (see step S203), the forwarding-end signal is transmitted again and, if there is no acknowledgement even after repeated transmissions above a certain number of times (see step S205), an error message is returned to indicate no connection with the host computer 200. It is arbitrary to process after sending the error message.

When the acknowledgement signal is received within the certain time interval (see step S203), the operation is normally ended (see step S204).

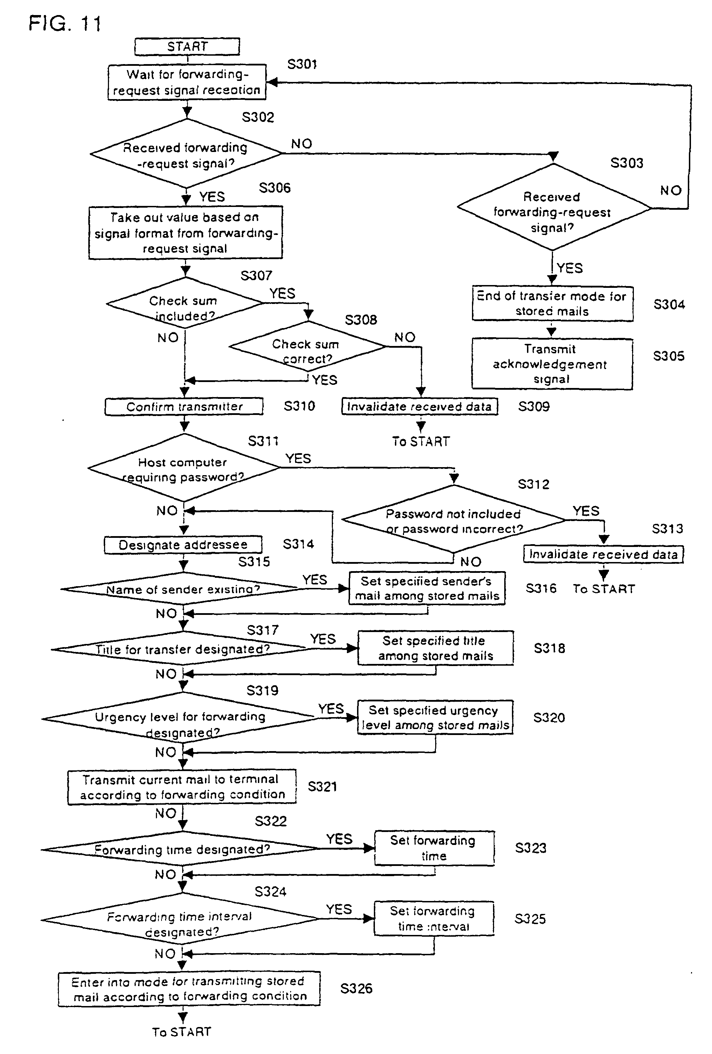

Fig. 11 is a flow chart indicating the mail forwarding process of the host computer. In Fig. 11, the host computer 200 stores the unread mails received in the absence of the operator in the mail storage section. Also, the host computer 200 remains waiting for the forwarding-request signal from the wireless communication terminal (see step S301).

When a signal related to the forwarding-request signal is received from the wireless communication terminal 100, the kind of this signal is checked (see step S302).

If the signal is not the forwarding-request signal, the host computer 200 checks whether that signal is the forwarding-end signal (see step S303) and, if that signal is the forwarding-end signal, the forwarding mode for stored mails is ended(see step S304). The host computer 200 then transmits an acknowledgement signal irrespective of the state of the host computer (see step S305).

When the forwarding-request signal is received, the value contained in that signal is drawn out(see step S306).

If there exists the check sum designation in the forwarding-request signal (see step S307), the host computer 200 confirms whether the check sum is correct (see step S308), and invalidates the received signal if the check sum is not correct(see step S309). When the check sum is correct, the user from whom the forwarding-request was sent is confirmed (see step S310) and, subsequently, if the host computer 200 requests the password for security maintenance (see step S311), the host computer 200 invalidates the received signal when the forwarding-request signal does not include the password or when an incorrect password is included in the forwarding-request signal (see step S313). If the password is correct, the forwarding address (such as host address and mail address) of the mail is stored and set (see step S314).

Subsequently, the option of the forwarding-request signal is checked (see step S315). When the sender is designated, the host computer 200 is set so as to forward only the mails received from that sender (see step S316).

Next, when the title of the mail to be forwarded is designated (see step S317), the host computer 200 is set to forward only the mails having the specified title (see step S318).

Also, when the urgency level designation exists (see step S319), the host computer 200 is set to forward only the mails having a designated urgency level (see step S320).

After these conditions have been set, the mail satisfying these conditions is searched for whithin the stored mails and transmitted to the terminal. If the mail satisfying the conditions is not found, the message indicative of no forwarded mails is transmitted (see step S321).

Subsequently, the option of the request signal is checked (see step S322). If there is a forwarding time designation, the forwarding time is stored (see step S322). Also, if there is a forwarding time interval designation (see step S324), the forwarding time interval is set (see step S325).

Thereafter, the forwarding mode is initiated and the mail is forwarded in accordance with the required conditions (see step S326). At the same time, the operation of waiting for the forwarding-request signal and the forwarding-end signal is continued and, when these signals are received, the same process will be repeated in a manner described above.

It will now be appreciated that the present invention has the following advantages:
(1) By transmitting a forwarding-request signal to a mail communication terminal via a wireless data communication network with the use of a portable wireless communication terminal at any place in the network, it is possible to forward and read out a mail received at the mail communication terminal from the wireless communication terminal at any convenient time;
(2) The wireless communication terminal enables the forwarding-request signal having the designation such as mail forwarding time and forwarding time interval to be transmitted so that a mail is transmitted to the mail communication terminal in accordance with that designation whereby it becomes unnecessary to regularly access the mail communication terminal with the only prupose of inquring for the received mail from the wireless communication terminal and the operation of a wireless data communication processing section is not needed except during the time designated by the forwarding-request signal, thereby reducing electric power consumption of the wireless communication terminal while minimizing the communication costs;
(3) The wireless communication terminal enables the transmission of the forwarding-request signal designating an electronic mail sender, a title and urgency level etc, so that it is possible to forward and read out an intended mail among mails received in the mail communication terminal with the use of the wireless communication terminal on hand; and
(4) A modification may be made in the electronic mail forwarding system which has no electronic mail forwarding function between the mail communication terminal and the wireless communication terminal by only changing the software in the user's mail communication terminal (viz., host computer) and the wireless communication terminal, thereby realizing an electronic mail forwarding function between the mail communication terminal and the wireless communication terminal.

## Claims

1. An electric mail forwarding system comprising portable-type wireless communication terminal (100) for a user and a mail communication terminal (200) for the same user, the mail communication terminal capable of forwarding an electric mail via a wireless data communication network (300) in response to a forwarding request signal for the electric mail,
in which the wireless communication terminal comprises:
a forwarding-request signal generating section (106) for generating the forwarding-request signal which includes additional information designating a forwarding time and a forwarding time interval of a given electric mail;
an electric mail processing section (107, 108) for transmitting the generated forwarding-request signal to the mail communication terminal via the wireless data communication network;
an electric mail receiving section for receiving the electric mail from the mail communication terminal; and
an electric mail storage section (104) for storing the received electric mail,
in which the mail communication terminal comprises:
a mail box (204; 214) for storing the electric mail received from a mail communication terminal for another user via a data communication network (400);
a forwarding-request signal recognizing section (206; 216) for recognizing the additional information contained in the forward-request signal received from the wireless communication terminal via the wireless data communication network; and
a communication processing section (208; 218) for sequentially forwarding the electric mail stored in the mail box to the wireless communication terminal in accordance with the recognized forwarding time and forwarding time interval.

2. An electric mail forwarding system as claimed in claim 1, in which the forwarding-request signal generating section (106) is arranged to generate the forward-request signal so as to designate a name of an electric mail sender, a title and an urgency level, and wherein the mail communication terminal is arranged so that, if the forwarding-request signal recognizing section recognizes the additional information designating a name of an electric mail sender, a title and an urgency level, the wireless data communication processing section forwards the electric mail to the wireless communication terminal in accordance with a selection of the electronic mail sender, the title and the urgency level.

3. An electronic mail forwarding system as claimed in claim 1 or claim 2, wherein the wireless data communication network (300) is connected to the data communication network (400) and wherein the communication section (218) is arranged to forward the electronic mail via the data communication network and the wireless data communication network.

## Patentansprüche

1. System zum Weiterleiten elektronischer Post, mit einem drahtlosen Kommunikationsendgerät (100) des tragbaren Typs für einen Anwender und einem Postkommunikationsendgerät (200) für denselben Anwender, wobei das Postkommunikationsendgerät in Reaktion auf ein Weiterleitungsanforderungssignal für elektronische Post die elektronische Post über ein drahtloses Datenkommunikationsnetz (300) weiterleiten kann,
wobei das drahtlose Kommunikationsendgerät versehen ist mit:
einem Weiterleitungsanforderungssignal-Erzeugungsabschnitt (106) zum Erzeugen des Weiterleitungsanforderungssignals, das zusätzliche Informationen enthält, die einen Weiterleitungszeitpunkt und ein Weiterleitungszeitintervall für eine gegebene elektronische Post angeben;
einem Verarbeitungsabschnitt (107, 108) für elektronische Post, der das erzeugte Weiterleitungsanforderungssignal über das drahtlose Datenkommunikationsnetz zu dem Postkommunikationsendgerät sendet;
einem Empfangsabschnitt für elektronische Post, der die elektronische Post von dem Postkommunikationsendgerät empfängt; und
einem Speicherabschnitt (104) für elektronische Post, der die empfangene elektronische Post speichert,
wobei das Postkommunikationsendgerät versehen ist mit:
einem Postkasten (204; 214), der die von dem Postkommunikationsendgerät für einen weiteren Anwender über das Datenkommunikationsnetz (400) empfangene elektronische Post speichert;
einem Weiterleitungsanforderungssignal-Erkennungsabschnitt (206; 216), der die zusätzlichen Informationen erkennt, die in dem Weiterleitungsanforderungssignal enthalten sind, das von dem drahtlosen Kommunikationsendgerät über das drahtlose Datenkommunikationsnetz empfangen wird; und
einem Kommunikationsverarbeitungsabschnitt (208; 218), der die in dem Postkasten gespeicherte elektronische Post in Übereinstimmung mit dem erkannten Weiterleitungszeitpunkt und dem erkannten Weiterleitungszeitintervall an das drahtlose Kommunikationsendgerät sequentiell weiterleitet.

2. System zum Weiterleiten elektronischer Post nach Anspruch 1, bei dem der Weiterleitungsanforderungssignal-Erzeugungsabschnitt (106) so beschaffen ist, dass er das Weiterleitungsanforderungssignal erzeugt, um so den Namen eines Absenders elektronischer Post, einen Titel und eine Dringlichkeitsstufe anzugeben, und bei dem das Postkommunikationsendgerät so beschaffen ist, dass der Verarbeitungsabschnitt für die drahtlose Datenkommunikation dann, wenn der Weiterleitungsanforderungssignal-Erkennungsabschnitt die zusätzlichen Informationen erkennt, die einen Namen eines Absenders elektronischer Post, einen Titel und eine Dringlichkeitsstufe angeben, die elektronische Post in Übereinstimmung mit einer Wahl des Absenders der elektronischen Post, des Titels und der Dringlichkeitsstufe an das drahtlose Kommunikationsendgerät weiterleitet.

3. System zum Weiterleiten elektronischer Post nach Anspruch 1 oder Anspruch 2, bei dem das drahtlose Datenkommunikationsnetz (300) mit dem Datenkommunikationsnetz (400) verbunden ist und bei dem der Kommunikationsabschnitt (218) so beschaffen ist, dass er die elektronische Post über das Datenkommunikationsnetz und das drahtlose Datenkommunikationsnetz weiterleitet.

## Revendications

1. Système de transfert de courrier électronique comprenant un terminal de communication sans fil de type portable (100) pour un utilisateur et un terminal mobile de communication de courrier (200) pour le même utilisateur, le terminal de communication de courrier étant capable de transférer un courrier électronique via un réseau de communication de données sans fil (300) en réponse à un signal de demande de transfert pour le courrier électronique,
dans lequel le terminal de communication sans fil comprend :
une section de génération de signal de demande de transfert (106) pour générer le signal de demande de transfert qui inclut une information supplémentaire désignant un temps de transfert et un intervalle de temps de transfert d'un courrier électronique donné ;
une section de traitement de courrier électronique (107, 108) pour transmettre le signal de demande de transfert généré au terminal de communication de courrier via le réseau de communication de données sans fil ;
une section de réception de courrier électronique pour recevoir le courrier électronique provenant du terminal de communication de courrier ; et
une section de stockage de courrier électronique (104) pour stocker le courrier électronique reçu,
dans lequel le terminal de communication de courrier comprend :
une boîte aux lettres (204 ; 214) pour stocker le courrier électronique reçu d'un terminal de communication de courrier pour un autre utilisateur via un réseau de communication de données (400) ;
une section de reconnaissance de signal de demande de transfert (206 ; 216) pour reconnaître l'information supplémentaire contenue dans le signal de demande de transfert reçu du terminal de communication sans fil via le réseau de communication de données sans fil ; et
une section de traitement de communication (208 ; 218) pour transférer séquentiellement le courrier électronique stocké dans la boîte aux lettres au terminal de communication sans fil conformément au temps de transfert et à l'intervalle de temps de transfert reconnus.

2. Système de transfert de courrier électronique selon la revendication 1, dans lequel la section de génération de signal de demande de transfert (106) est disposée pour générer le signal de demande de transfert afin de désigner un nom d'expéditeur de courrier électronique, un titre et un niveau d'urgence, et dans lequel le terminal de communication de courrier est disposé de sorte que, si la section de reconnaissance de signal de demande de transfert reconnaît l'information supplémentaire désignant un nom d'expéditeur de courrier électronique, un titre et un niveau d'urgence, la section de traitement de communication de données sans fil transfère le courrier électronique au terminal de communication sans fil conformément à une sélection de l'expéditeur du courrier électronique, du titre et du niveau d'urgence.

3. Système de transfert de courrier électronique selon la revendication 1 ou la revendication 2, dans lequel le réseau de communication de données sans fil (300) est connecté au réseau de communication de données (400) et dans lequel la section de communication (218) est disposée pour transférer le courrier électronique via le réseau de communication de données et le réseau de communication de données sans fil.
